# EUROPEAN PATENT SPECIFICATION

(11) **EP 0 920 225 B1**
(45) Date of publication and mention of the grant of the patent: **26.01.2005**
(21) Application number: 98122064.3
(22) Date of filing: 20.11.1998
(51) Int. Cl.: H04M 11/04, G08B 25/01

(54) **Portable cellular phone**
Tragbares zellulares Telefongerät
Téléphone cellulaire portable

(30) Priority: 25.11.1997 JP 33823897
(43) Date of publication of application: 02.06.1999
(73) Proprietor: MATSUSHITA ELECTRIC INDUSTRIAL CO., LTD, Kadoma-shi, Osaka 571-0000 (JP)
(72) Inventor: Yamamoto, Naoyuki, Yokohama-shi, Kanagawa 240-0042 (JP)
(74) Representative: Grünecker, Kinkeldey, Stockmair & Schwanhäusser Anwaltssozietät

(56) References cited:
- WO-A-97/33260
- GB-A- 2 308 707
- US-A- 4 935 951
- US-A- 5 012 507
- US-A- 5 365 570

## Description

### BACKGROUND OF THE INVENTION

The present invention relates to a portable cellular phone, and more particularly, to a portable cellular phone which sounds an emergency alarm.

An alarm-only device, such as a crime-prevention buzzer for lady use or an emergency pendant for aged-people use, is used as a device to indicate an emergency. In a conventional portable cellular phone, a sounder is used as means for indicating an incoming call to the user by activation of an alarm and cannot be used for indicating an emergency. In a common case where the user originates a call through use of a portable cellular phone, the user must enter a telephone number of a called party by way of ten keys and press a call-origination key.

A "portable telephone system" is described in Unexamined Japanese Patent Publication 7-183970 as an example of a portable cellular phone capable of activating an emergency call. If the user presses an emergency-call-only key, a line is connected to a specific telephone set designated as an emergency call receiver, and information about the address of the base station is output.

The foregoing conventional portable cellular phone is not provided with means for giving an alarm in response to an emergency input. Therefore, the user of the portable cellular phone who does not carry a crime-prevention buzzer or an emergency pendant cannot instantaneously indicate an emergency through use of the portable cellular phone.

The general idea of using a mobile phone as an "alarm buzzer" is disclosed in the document GB-A-2 308 707, wherein an alarm button permits to trigger the emission of a sound ("anti mugging alarm") through the existing speaker.

### SUMMARY OF THE INVENTION

This object of the invention is solved by the features of claim 1. Preferred embodiments are referred to in the subclaims.

### BRIEF DESCRIPTION OF THE DRAWINGS

FIG. 1 is a block diagram showing a portable cellular phone according to a first embodiment of the present invention;
FIG. 2 is a block diagram showing emergency input detection means according to the first embodiment;
FIG. 3 is a waveform chart showing the waveform of an emergency input detection signal according to the first embodiment;
FIG. 4 is a block diagram showing a portable cellular phone according to a second embodiment of the present invention;
FIG. 5 is a block diagram showing a portable cellular phone according to a third embodiment of the present invention; and
FIX. 6 is a block diagrams showing a portable cellular phone according to a fourth embodiment o the present invention.

### DETAILED DESCRIPTION OF THE PREFERRED EMBODIMENTS

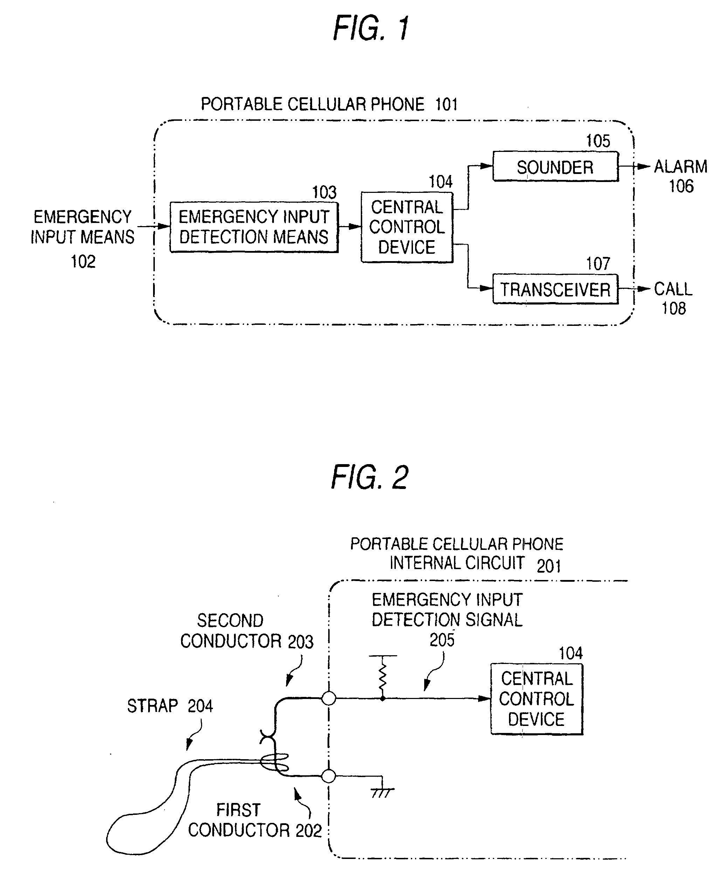

Preferred embodiments of the present invention will be described in detail by reference to FIGs. 1 through 6.

### First Embodiment

A first embodiment of the present invention is directed to a portable cellular phone which automatically activates a sounder so as to give an alarm and originates a call when emergency input detection means detects an emergency input signal output from emergency input means.

FIG. 1 is a block diagram showing a portable cellular phone according to the first embodiment. In FIG. 1, a portable cellular phone 101 comprises emergency input means 102 which enables the user to perform an emergency input operation; emergency input detection means 103 which detects an emergency input; a central control device 104 which controls the entire portable cellular phone; a sounder 105 which produces an alarm sound 106; and a transceiver 107 which performs call origination (108). When the user performs an emergency input operation, the emergency input detection means 103 detects the emergency input, and the central control device 104 automatically controls the sounder 105 so as to given an alarm 106. Simultaneously, the central control device 104 controls the transceiver 107 so as to automatically originate a call (108).

FIG. 2 is a detailed block diagram showing the emergency input detection means 103. In FIG. 2, the emergency input detection means 103 comprises a portable cellular telephone internal circuit 201, a first conductor-202, a second conductor 203, and a strap 204. The first conductor 202 is grounded by way of the portable cellular phone internal circuit 201, and the potential of the second conductor 203 is pulled up by means of the portable cellular phone internal circuit 201. An emergency input detection signal 205 is input to the central control device 104. The first conductor 202 and the second conductor 203 are in contact with each other in the form of a spring in normal times. Consequently, a ground-potential signal is input to the central control device 104 as the emergency input detection signal 205 in normal times.

The strap 204 is wrapped around the first conductor 202 and the second conductor 203. In the first embodiment, as an emergency input operation by way of the emergency input means 102, the user pulls the strap 204 from the first conductor 202 or the second conductor 203. The moment at which the strap 204 is removed, the first conductor 202 is brought out of contact with the second conductor 203. Consequently, in the event of an emergency, the emergency input detection signal 205 is changed to a pull-up potential.

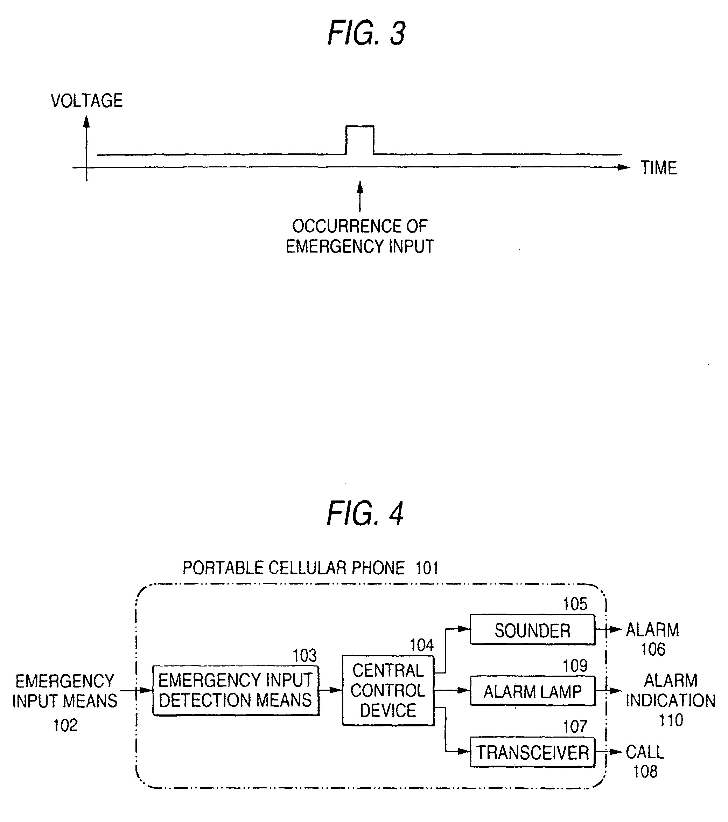

FIG. 3 is a waveform chart showing the waveform of the emergency input detection signal 205. As shown in FIG. 3, the emergency input detection signal 205 is in a ground potential in normal times. In the event of an emergency, the emergency input detection signal 205 is imparted with a waveform which changes to a pull-up potential In the event of an emergency.

Upon detection of a change in the potential of the emergency input detection signal 205, the central control device 104 detects the presence of an-emergency input. A commonly known method for detecting a pulse signal, such as that shown in FIG. 3, is an edge-interrupt signal detection method. Upon detection of a change in the potential of the emergency input detection signal 205 in the form of an edge-interrupt signal, the central control device 104 activates the sounder 105 so as to given an alarm 106. Further, upon detection of a change in the potential of the emergency input detection signal 205 in the form of an edge-interrupt signal, the central control device 104 activates the alarm 106 and controls the transceiver 107 so as to originate a call 108.

As mentioned above, according to the first embodiment of the present invention, the emergency input detection means is made up of the portable cellular phone internal circuit, the first conductor, the second conductor, and the strap. Therefore, even if the user performs any emergency input operation, the portable cellular phone can detect the emergency input and automatically activates an alarm simultaneously with automatic origination of a call.

Any measure, such as a press button, other than the foregoing means may be used as the emergency input detection means, so long as measure enables production of an edge-interrupt signal.

### Second Embodiment

A second embodiment of the present invention is directed to a portable cellular phone which automatically activates an alarm, illuminates an alarm lamp, and automatically originates a call when emergency input detection means receives an emergency input signal from emergency input means. The second embodiment differs from the first embodiment in that the portable cellular phone according to the second embodiment is provided with an alarm lamp for indicating an emergency.

FIG. 4 is a block diagram showing the portable cellular phone according to the second embodiment. FIG. 4 corresponds to the block diagram shown in FIG. 1, so long as an alarm lamp 109 is added to the block diagram. If the user enters an emergency input by way of the emergency input means 102, and the emergency input detection means 103 detects an emergency input signal, the central control device 104 activates the alarm lamp 109, thereby optically indicating an alarm 110. The alarm lamp 109 may constantly illuminate or blink. Since the sounder 105, the emergency lamp 109, and the transceiver 107 are connected in shunt with the central control device 104, there may be used only either the alarm activated by the sounder 105 or indication of an alarm by the alarm lamp 109. Further, both the sounder 105 and the alarm lamp109 may be activated simultaneously. Alternatively, the sounder 105 and the alarm lamp 109 may be activated alternately. Moreover, the sounder 105 and the alarm lamp 109 may be activated in combination with the call originating action of the transceiver 107.

Although not shown in FIG. 4, the a backlit ten keys commonly used for the portable cellular phone. In such a case, the entire portable cellular phone may illuminate or blink. Further, if red illumination means is used as a backlight of ten keys, a difference in color between an ordinary backlight and the red backlight enhances an emergence of the alarm.

As mentioned above, according to the second embodiment, the portable cellular phone is made up of a central control device for controlling operations of the overall portable cellular phone, a transceiver for receiving and originating a call, an emergency input means, an emergency input detection means for detecting an emergency input signal input by way of the emergency input means, a sounder for activating an alarm, and an alarm lamp for indicating an alarm. With such a configuration, even if there is an emergency input, an alarm is automatically activated, and an alarm lamp also illuminates, thus enabling automatic origination of a call.

### Third Embodiment

A third embodiment is directed to a portable cellular phone, wherein when the emergency input detection means detects an emergency input signal from the emergency input means, there are carried out automatic activation of an alarm in a predetermined alarming pattern, illumination of an alarm lamp, and automatic origination of a call. The third embodiment differs from the second embodiment in that the portable cellular phone is provided with alarming pattern storage means and alarming pattern switching means.

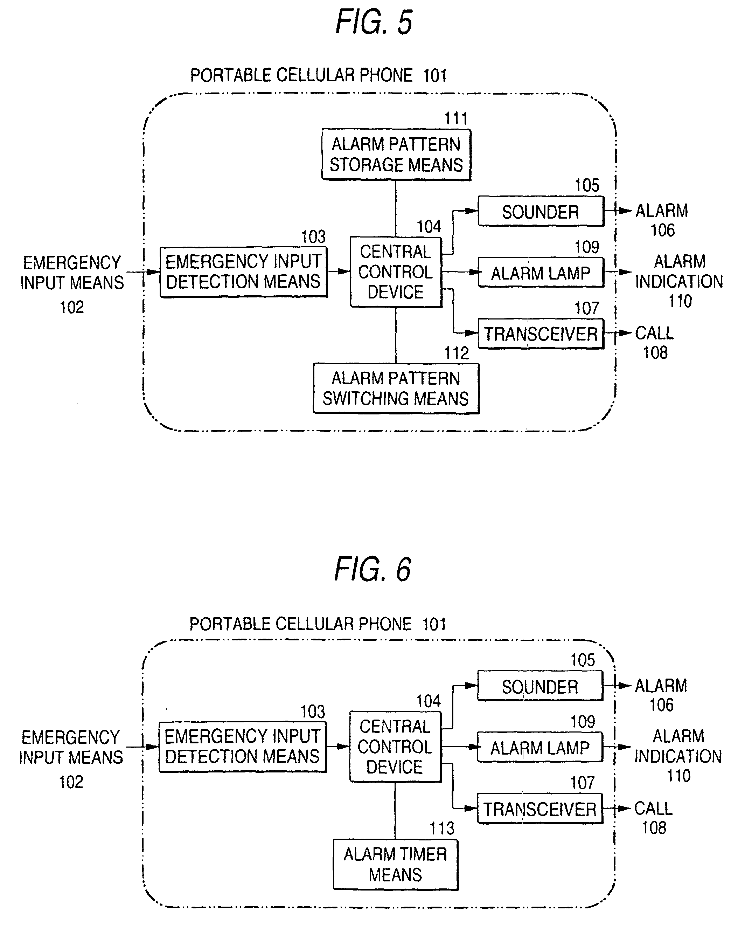

FIG. 5 is a block diagram showing a portable cellular phone according to the third embodiment and corresponds to the block diagram shown in FIG. 4, so long as alarming pattern storage means 111 and alarming pättern switching means 112 are added to the portable cellular phone shown in FIG. 4.

For example, a plurality of sounding patterns, such as a crime-prevention alarming pattern and an emergency alarming pattern, are stored in the alarming pattern storage means 111 in advance. So long as the alarming pattern switching means 112 is set so as to switch the alarming pattern in response to the type of an alarm, an alarm can be activated in a preset emergency alarming pattern when an emergency input signal is detected.

Even with regard to the alarm lamp 109, a plurality of illumination patterns having different illumination intervals, for example, may be stored in the alarming pattern storage means 111, and an arbitrary illumination pattern may be selected in response to the type of an alarm.

In response to the emergency input signal, there may be used either activation of the sounder 105 or indication of an alarm by the alarm lamp 109, or both the sounder 105 and the alarm lamp 109 may be activated simultaneously. Alternatively, the sounder 105 or the alarm lamp 109 may be used in combination with a call originating action of the transceiver 107.

As mentioned above, according to the third embodiment, the portable cellular phone is made up of emergency input means, an emergency input detection means for detecting an emergency input signal input by way of the emergency input means, a central control device for controlling operations of the overall portable cellular phone, a sounder for activating an alarm, and an alarm lamp for indicating an alarm, alarming pattern storage means, and alarming pattern switching means, and a transceiver for receiving and originating a call. With such a configuration, even if there is an emergency input, an alarm is automatically activated in a predetermined pattern, and an alarm lamp can also illuminate in a predetermined illumination pattern.

### Fourth Embodiment

A fourth embodiment is directed to a portable cellular phone which automatically activates an alarm and illuminates an alarm lamp at regular intervals and automatically originates a call when emergency input detection means detects an emergency input signal entered by way of emergency input means. The fourth embodiment differs from the third embodiment in that the portable cellular phone according to the fourth embodiment is provided with alarm timer means.

FIG. 6 is a block diagram showing a portable cellular phone according to the fourth embodiment and corresponds to the block diagram shown in FIG. 4, so long as the portable cellular phone in FIG. 4 is provided with alarm timer means 113. The alarm timer means 113 is a timer circuit for setting a specified time interval and enables a sounder or an alarm lamp to be activated at given intervals.

In case of the user being not easily rescued, such as he being captured under a building collapsed by an earthquake or being get lost in the mountains, activation of an alarm or illumination of an alarm lamp at given intervals prevents depletion of batteries of the portable cellular phone, thus increasing the probability of rescue.

As has been mentioned above, according to the fourth embodiment, the portable cellular phone is made up of an emergency input means, an emergency input detection means for detecting an emergency input signal input by way of the emergency input means, a central control-device for controlling operations of the overall portable cellular phone, a sounder for activating an alarm, an alarm lamp for indicating an alarm, alarming timer means, and a transceiver for receiving and originating a call. With such a configuration, activation of an alarm and illumination of an alarm lamp can automatically be carried out at given intervals, and a call can be automatically originated.

As mentioned above, according to the present invention, a portable cellular phone is constituted so as to comprise at least emergency input means, emergency input detection means for detecting an emergency input, a central control unit for controlling operations of the entire portable cellular phone, a sounder for giving an alarm, and a transceiver for receiving or originating a call. By means of such a configuration, even if the user performs an emergency input operation, such as a crime-prevention input or an emergency input, the portable cellular phone detects the emergency input and automatically activates an alarm. Simultaneously, the portable cellular phone also automatically originates a call. Thus, the present invention yields an advantage of enabling the user to instantaneously indicate an emergency.

Further, the portable cellular phone is provided with an alarm lamp for informing an alarm. By means of this alarm lamp, even if there is an emergency input, the portable cellular phone is capable of automatically activating an alarm, illuminating an alarm lamp, and originating a call.

Further, the portable cellular phone is provided with alarming pattern storage means and alarming pattern switching means. By means of such a configuration, even if there is an emergency input, the portable cellular phone can automatically activate an alarm in a predetermined alarming pattern and illuminate an alarm lamp in a given illumination pattern.

Further, the portable cellular phone is provided with alarm timer means. By means of this alarm timer means, the portable cellular phone can automatically carry out activation of an alarm and illumination of an alarm lamp at given intervals and automatic origination of a call.

## Claims

1. A portable cellular phone (101) comprising:
a central control device (104) for controlling operations of the entire portable cellular phone;
a transceiver (107) for originating or receiving a call (108);
emergency input means;
emergency input detection means (103) for detecting an emergency input signal entered by way of the emergency input means (102),
a sounder (105) for giving an alarm (106) in response to the emergency input detection means detecting the emergency input signal (205)
**characterized in that**
the emergency input means (102) comprises
first (202) and second (203) conductors, which are disposed so as to face each other and are made of a resilient member such as a leaf spring;
means for pulling up the potential of the first or second conductor by way of an internal circuit; and
a strap (204) coiled around the first or second conductor, and
wherein the emergency input detection means comprises means for detecting, as an emergency input signal, a potential change caused when the first and second conductors are brought out of contact with each other as a result of the removal of the strap.

2. The portable cellular phone as claimed in claim 1, wherein the transceiver originates a call in response to the emergency input detection means detecting the emergency input signal.

3. The portable cellular phone as claimed in claim 1, further comprising:
storage means (111) for storing a crime-prevention sounding pattern and an emergency sounding pattern for use with the sounder; and
sound switching means (112) for switching between the crime-prevention sounding pattern and the emergency sounding pattern.

4. The portable cellular phone as claimed in claim 1, wherein an alarm lamp (109) illuminates or blinks in response to the emergency input detection means detecting the emergency input signal.

5. The portable cellular phone as claimed in claim 4, wherein a back light of ten keys doubles as the alarm lamp.

6. The portable cellular phone as claimed in claim 4, wherein the back light of the ten keys has red illumination means which is used as the alarm lamp.

7. The portable cellular phone as claimed in claim 4, further comprising
storage means for storing a plurality of illumination patterns for use with the alarm lamp; and
illumination pattern switching means.

8. The portable cellular phone as claimed in any one of claims 1 through 7, further comprising:
time means (113) for setting a regular time interval at which the sounder or the alarm lamp is intermittently activated.

## Patentansprüche

1. Tragbares Mobiltelefon (101), das umfasst:
eine zentrale Steuervorrichtung (104) zum Steuern von Funktionen des gesamten tragbaren Mobiltelefons;
einen Sendeempfänger (107) zum Erzeugen oder Empfangen eines Rufs (108);
eine Notfall-Eingabeeinrichtung;
eine Notfalleingabe-Erfassungseinrichtung (103), die ein Notfalleingabe-Signal erfasst, das über die Notfalleingabe-Einrichtung (102) eingegeben wird,
einen Signalgeber (105), der in Reaktion darauf, dass die Notfalleingabe-Erfassungseinrichtung das Notfalleingabe-Signal (205) erfasst, eine Warnmeldung (106) abgibt,
**dadurch gekennzeichnet, dass**:
die Notfalleingabe-Einrichtung (102) umfasst:
einen ersten (202) und einen zweiten (203) Leiter, die so angeordnet sind, dass sie einander zugewandt sind, und die aus einem elastischen Element, wie beispielsweise einer Blattfeder, bestehen;
eine Einrichtung zum Anheben des Potenzials des ersten oder des zweiten Leiters über eine interne Schaltung; und
einen Riemen (204), der um den ersten oder den zweiten Leiter herumgewickelt ist, und
wobei die Notfalleingabe-Erfassungseinrichtung eine Einrichtung umfasst, die als ein Notfalleingabe-Signal eine Potenzialänderung erfasst, die verursacht wird, wenn aufgrund des Entfernen des Riemens Kontakt zwischen dem ersten und dem zweiten Leiter unterbrochen wird.

2. Tragbares Mobiltelefon nach Anspruch **1**, wobei der Sendeempfänger einen Ruf in Reaktion darauf erzeugt, dass die Notfalleingabe-Erfassungseinrichtung das Notfalleingabe-Signal erfasst.

3. Tragbares Mobiltelefon nach Anspruch **1**, das des Weiteren umfasst:
eine Speichereinrichtung (111) zum Speichern eines Verbrechensverhinderungs-Tonmusters und eines Notfall-Tonmusters zum Einsatz mit dem Signalgeber; und
eine Ton-Umschalteinrichtung (112), die zwischen dem Verbrechensverhinderungs-Tonmuster und dem Notfall-Tonmuster umschaltet.

4. Tragbares Mobiltelefon nach Anspruch **1**, wobei eine Warnleuchte (109) in Reaktion darauf, dass die Notfalleingabe-Erfassungseinrichtung das Notfalleingabe-Signal umfasst, leuchtet oder blinkt.

5. Tragbares Mobiltelefon nach Anspruch **4,** wobei eine Hintergrundbeleuchtung von zehn Tasten ebenfalls als die Warnleuchte dient.

6. Tragbares Mobiltelefon nach Anspruch **4,** wobei die Hintergrundbeleuchtung der zehn Tasten eine rote Beleuchtungseinrichtung aufweist, die als die Warnleuchte verwendet wird.

7. Tragbares Mobiltelefon nach Anspruch **4,** das des Weiteren umfasst:
eine Speichereinrichtung zum Speichern einer Vielzahl von Beleuchtungsmustern zum Einsatz mit der Warnleuchte; und
eine Beleuchtungsmuster-Umschalteinrichtung.

8. Tragbares Mobiltelefon nach einem der Ansprüche 1 bis 7, das des Weiteren umfasst:
eine Zeiteinrichtung (113) zum Einstellen eines normalen Zeitintervalls, in dem der Signalgeber oder die Warnleuchte intermittierend aktiviert wird.

## Revendications

1. Téléphone cellulaire portable (101) comprenant :
un dispositif central de commande (104) destiné à commander le fonctionnement de la totalité du téléphone portable ;
un émetteur-récepteur (107) destiné à lancer ou à recevoir un appel (108) ;
un moyen d'entrée d'urgence ;
un moyen (103) de détection d'entrée d'urgence destiné à détecter un signal d'entrée d'urgence appliqué à l'aide du moyen d'entrée d'urgence (102) ;
un dispositif acoustique (105) destiné à délivrer une alarme (106) en réponse au moyen de détection d'entrée d'urgence détectant le signal d'entrée d'urgence (205)
**caractérisé en ce que**
le moyen d'entrée d'urgence (102) comprend
un premier (202) et un deuxième (203) conducteurs qui sont disposés de manière à faire face l'un à l'autre et sont constitués d'un élément résilient tel qu'une lame de ressort ;
un moyen destiné à élever le potentiel du premier ou du deuxième conducteur à l'aide d'un circuit interne ; et
un fil (204) bobiné autour du premier ou du deuxième conducteur, et
dans lequel le moyen de détection d'entrée d'urgence comprend un moyen destiné à détecter, comme signal d'entrée d'urgence, une modification de potentiel causée lorsque les premier et deuxième conducteurs sont mis hors de contact l'un avec l'autre du fait du retrait du fil.

2. Téléphone cellulaire portable selon la revendication 1, dans lequel l'émetteur-récepteur lance un appel en réponse au moyen de détection d'entrée d'urgence détectant le signal d'entrée d'urgence.

3. Téléphone cellulaire portable selon la revendication 1, comprenant en outre :
un moyen de mémorisation (111) destiné à mémoriser une configuration acoustique de prévention de crime et une configuration acoustique d'urgence destinée à être utilisée avec le dispositif acoustique ; et
un moyen (112) de commutation du son destiné à commuter entre la configuration acoustique de prévention de crime et la configuration acoustique d'urgence.

4. Téléphone cellulaire portable selon la revendication 1, dans lequel une lampe d'alarme (109) s'allume ou clignote en réponse au moyen de détection d'entrée d'urgence détectant le signal d'entrée d'urgence.

5. Téléphone cellulaire portable selon la revendication 4, dans lequel une lampe de rétroéclairage sur dix touches double la lampe d'alarme.

6. Téléphone cellulaire portable selon la revendication 4, dans lequel la lampe de rétroéclairage sur dix touches comporte un moyen d'illumination rouge qui est utilisé comme lampe d'alarme.

7. Téléphone cellulaire portable selon la revendication 4, comprenant en outre :
un moyen de mémorisation destiné à mémoriser une pluralité de configurations d'illumination pour utilisation avec la lampe d'alarme ; et
un moyen de commutation des configurations d'illumination.

8. Téléphone cellulaire portable selon l'une quelconque des revendications 1 à 7, comprenant en outre :
un moyen de temporisation (113) destiné à fixer un intervalle de temps régulier selon lequel le dispositif acoustique ou la lampe d'alarme sont activés de façon intermittente.
